# EUROPÄISCHE PATENTSCHRIFT

(11) **EP 1 762 376 B1**
(45) Veröffentlichungstag und Bekanntmachung des Hinweises auf die Patenterteilung: **27.10.2010**
(21) Anmeldenummer: 06018825.7
(22) Anmeldetag: 08.09.2006
(51) Int. Cl.: B32B 15/01, B23K 20/08

(54) **Werkstoffverbund mit explosionsgeschweisstem Zwischenstück**
Composite material with explosion welded intermediate part
Matériau composite avec partie intermédiaire soudée par explosion

(30) Priorität: 13.09.2005 AT 61505 U
(43) Veröffentlichungstag der Anmeldung: 14.03.2007
(73) Patentinhaber: PLANSEE SE, 6600 Reutte (AT)
(72) Erfinder: Schedler, Bertram, 6600 Reutte (AT); Scheiber, Karlheinz, 6600 Breitenwang (AT); Friedle, Hans-Dieter, 6651 Häselgehr (AT); Huber, Thomas, 6600 Breitenwang (AT); Schedle, Dietmar, 6600 Reutte (AT); Mair, Sandra, 6600 Reutte (AT); Friedrich, Thomas, 87642 Halblech (DE); Zabernig, Anton, 6600 Reutte (AT); Wörle, Nadine, 6600 Musau (AT)

(56) Entgegenhaltungen:
- DE-A1- 4 241 433
- GB-A- 1 248 794
- US-A- 4 193 529

## Beschreibung

Die Erfindung betrifft ein Verfahren zur Herstellung eines Werkstoffverbundes, der einen Teil aus Stahl oder einem Titan-Basis-Werkstoff und einen Teil aus einem Kupfer- oder Aluminium-Basis-Werkstoff umfasst.

Kupfer- oder Aluminium-Basis-Werkstoffe können mittels Schmelzschweißverfahren nicht direkt mit Stahl oder Titan-Basis-Werkstoffen verbunden werden. Unter Basis-Werkstoffen sind im Folgenden jeweils Legierungen mit einem Gehalt des Basismetalls von > 50 Gew.% zu verstehen, Der Begriff Stahl umfasst die gesamte Werkstofffamilie der Stähle.

Ein wichtiger Einsatzbereich von Werkstoffverbunden, die einen Teil aus Stahl oder einem Titan-Basis-Werkstoff und einen Teil aus einem Kupfer- oder Aluminium-Basis-Werkstoff umfassen, sind Kühlkomponenten. Kupfer und Aluminium werden auf Grund ihrer hohen Wärmeleitfähigkeit eingesetzt. Um eine ausreichende Strukturfestigkeit zu erzielen, werden die Kupfer- oder Aluminiumteile mit einem Strukturwerkstoff, im üblichen Stahl oder einem Titan-Werkstoff, verbunden.

Stahl - Kupfer Werkstoffverbunde werden beispielsweise als Teile von Erste-Wand-Komponenten von Fusionsreaktoren verwendet. Die Entwicklung von Erste-Wand-Komponenten, speziell für die Bereiche höchster Energiedichten, wie beispielsweise den Divertor-, Baffel- und Limiterbereich, stellt ein Schlüsselelement bei der technologischen Umsetzung der Fusionsforschung dar. Es wurden umfangreiche Entwieklungsprogramme durchgeführt, diese Werkstoffe stoffschlüssig zu verbinden.

Das Dokument DE-A-42 29 793 offenbart ein Verfahren zur Herstellung eines Werkstoffverbundes, der einen Teil (3) aus Stahl umfasst, wobei ein Zwischenstück hergestellt wird, bestehend aus einem Bereich (2) aus Stahl und einem Bereich (1) aus einem Kupfer-Basis-Werkstoff, die durch Explosionsschweißen unter Ausbildung einer Fügezone verbunden sind.

Der Teil (3) aus Stahl ist mit dem Bereich (2) aus Stahl unter Ausbildung einer Fügezone durch Schweißen verbunden.

So sind speziell für Stahl / Kupfer Werkstoffverbunde folgende Lösungen bekannt:
- Einschweißen eines Ni-Adapters zwischen dem Kupfer-Basis-Werkstoff und dem Stahl
- Abdichtung des Übergangs durch eine galvanisch aufgebrachte Schicht
- Diffusionsschweißen
- LÖten

Lötverbindungen weisen hinsichtlich Korrosionsbeständigkeit und Festigkeit Nachteile auf. Auch die Festigkeit von mittels Diffusionsschweißen hergestellten Verbindungen ist vielfach nicht ausreichend. Zudem ist die Einstellung der erforderlichen Prozesskonstanz äußerst aufwendig. Die Verbindungen zeigen zudem stark streuende und zudem niedrige Festigkeitswerte. Auch das Einschweißen eines Ni-Adapters zwischen dem Kupfer-Basis-Werkstoff und dem Stahl ist nachteilig, wie thermische Belastungstests zeigten. So ist dieser Übergang anfällig für lokalisiertes Fließen im Bereich des Ni-Adapters.

Es ist daher Aufgabe der gegenständlichen Erfindung, Werkstoffverbunde bereitzustellen, die eine ausreichende Funktionsfähigkeit, speziell im Hinblick auf Festigkeit, thermische Ermüdung und Korrosionsbeständigkeit aufweisen.

Die Aufgabe wird durch die unabhängigen Ansprüche 1 und 10 gelöst.

Dabei wird zunächst einen Rohrabschnitt hergestellt, das aus einem Bereich aus Stahl und einem Bereich aus einem Kupfer-Basis-Werkstoff besteht, die durch Explosionsschweißen verbunden sind. In einfacher Weise kann dies so geschehen, dass Bleche / Platten aus den jeweiligen Werkstoffen verwendet werden. Da Kupfer duktiler als Stahl ist und auch eine niedrigere Streckgrenze aufweist ist es günstiger, das Kupfe blech / -platte auf dem Stahlblech / -platte zu positionieren. Der Sprengstoff wird in weiterer Folge auf dem Kupferblech / -platte aufgebracht. Wie für Explosionsschweißverbindungen typisch, bildet sich eine wellige, verzahnte Fügezone mit hoher Festigkeit aus. Aus dem so hergestellten Verbund können durch mechanische oder Strahlverfahren Zwischenstücke mit entsprechender Geometrie herausgearbeitet werden.

In weiterer Folge werden die Teile des Werkstoffverbundes mit den entsprechenden Bereichen des Zwischenstücks durch ein Schmelz- oder Diffusionsschweißverfahren verbunden. Entsprechend heißt dabei, dass der Teil des Werkstoffverbundes und der an diesem gefügte Bereich des Zwischenstücks aus artgleichen Werkstoffen sind. Unter artgleich wird dabei verstanden, dass diese aus demselben Basiswerkstoff bestehen, d.h. zum Beispiel Teil aus Kupfer-Basis-Werkstoff und Bereich aus Kupfer-Basis-Werkstoff oder Teil aus Stahl und Bereich aus Stahl.

Für die Herstellung eines Werkstoffverbundes, wird also zunächst ein Zwischenstück aus Stahl und einem Kupfer-Basis-Werkstoff mittels Explosionsschweißen hergestellt. In weiterer Folge werden durch ein Schmelz- oder Diffusionsschweißverfahren ein Stahlteil mit dem Stahlbereich des Zwischenstücks und ein Teil aus einem Kupfer-Basis-Werkstoff mit dem Bereich aus einem Kupfer-Basis-Werkstoff des Zwischenstücks verbunden. Der Stahl des Zwischenstücks kann eine im zum Stahl des restlichen Werkstoffverbundes unterschiedliche Zusammensetzung und / oder Struktur oder, was bevorzugt ist, die gleiche Zusammensetzung und / oder Struktur aufweisen. In analoger Weise gilt dies auch für den Kupfer-Basis-Werkstoff.

Für den Werkstoffverbund werden vorteilhafterweise verfestigte Werkstoffe eingesetzt, wie beispielsweise teilchenverfestigte Kupferlegierungen (z.B. Cu-Cr-Zr) oder legierte Stähle (z.B.: austenitische Stähle, wie 316L). Daher weisen die jeweiligen Werkstoffbereiche des Zwischenstücks (z.B. Cu-Cr-Zr / 316L) eine ausreichend hohe Fließgrenze auf. Es gibt daher keinen Übergang mit niedriger Festigkeit, welcher durch lokalisiertes Fließen versagen kann. Durch Spannungen auftretende Dehnungen können daher über einen größeren Bereich aufgenommen werden oder werden von den Teilen des Werkstoffverbundes übemommen. Weiters stellt das Explosionsschweißen für alle Werkstoffkombinationen ein kostengünstiges und etabliertes Verfahren dar. Die explosionsgeschweißte Verbindung kann zerstörungsfrei geprüft werden. Da die Verbindung zwischen den Bereichen des Zwischenstücks und den Teilen des Werkstoffverbunds aus jeweils artgleichen Werkstoffen besteht, können Schmelzschweiß- oder Diffusionsschweißvertahren eingesetzt werden. Bei den Schmelzschweißverfahren sind das WIG-, Laser- und Elektronenstrahlschweißen hervorzuheben.
Für Anwendungen im Bereich der Ersten-Wand ist es weiters vorteilhaft, dass die Forderung nach möglichst geringer relativer magnetischer Permeabilität erfüllt ist, da die Verwendung von Nickel vermieden wird.

Für den Einsatz als Kühlkomponente ist es vorteilhaft, wenn das Zwischenstück als Rohrabschnitt und die Teile des Werkstoffverbundes rohrförmig ausgebildet sind. Das als Rohrabschnitt ausgebildete Zwischenstück wird dabei ebenfalls aus einer mittels Explosionsschweißen hergestellten Verbundplatte herausgearbeitet, wobei die axiale Erstreckung des Rohrabschnitts der Dicke der Verbundplatte entspricht.
Besonders vorteilhafte Ergebnisse konnten für Werkstoffverbunde aus Stahl / Kupfer-Basis-Werkstoff erzielt werden. Aus der Vielfalt von Stahlsorten sind die austenitischen, bzw. teilaustenitischen Stähle hervorzuheben. Als Kupfer-Basis-Werkstoff haben sich teilchengehärtete Kupferlegierungen, wie beispielsweise die ausscheidungsgehärtete Kupferlegierung Cu-Cr-Zr bewehrt. in besonders vorteilhafter Weise lassen sich mit dem erfindungsgemäßen Verfahren Erste-Wand-Komponenten oder Teile von Erste-Wand-Komponenten eines Fusionsreaktors herstellen.

Im Folgenden ist ein erfindungsgemäßes Beispiel dargestellt.

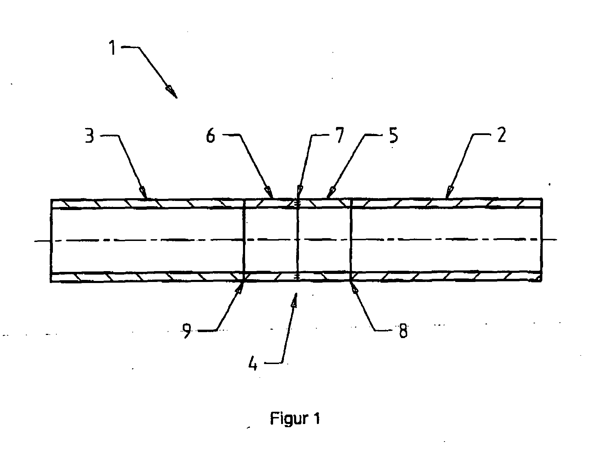

Figur 1 zeigt dabei einen Querschnitt eines rohrförmig ausgebildeten Werkstoffverbundes.

### Beispiel:

Es wurde ein rohrförmiger Werkstoffverbund -1- aus Cu-Cr-Zr / 316L (austenitischer Stahl) hergestellt. Derartige Werkstoffverbunde werden als Wärmetauscher im Divertor eines Fusionsreaktors eingesetzt. Dazu wurde eine Platte aus Cu-Cr-Zr im lösungsgeglühten, abgeschreckten Zustand mit einer Platte aus 316L durch Explosionsschweißen verbunden. Die beiden Platten hatten eine Fläche von jeweils 500 x 500 mm² und eine Dicke von jeweils 15mm. Für das Explosionsschweißen wurde die Cu-Cr-Zr Platte als "Flyer" verwendet. Dazu wurde der Sprengstoff auf der Oberseite der Cu-Cr-Zr Platte positioniert und gezündet, wodurch es zur Ausbildung der Fügezone -7-kam.

Nach der Schweißung wurde der Plattenverbund einer Ultraschallprüfung unterzogen. Dadurch konnten gebundene und ungebundene Bereiche lokalisiert werden. Aus dem gebundenen Bereich wurde dann mittels Wasserstrahlschneiden ein Zwischenstück -4- in Form eines Bolzens derart aus der Platte geschnitten, dass die Bolzenachse normal auf die explosionsgeschweißte Verbindungsfläche -7- steht. Der Bolzen -4- hatte einen Durchmesser von 15 mm und eine Höhe von 30 mm. Der Stahlbereich -5- und der Cu-Cr-Zr Bereich -6- hatte dabei jeweils eine Dicke von 15 mm. Die Explosionsschweißung -7- zeigte die für dieses Verbindungsverfahren typische Wellenform.
Die beiden Enden dieses Bolzens -4- wurden mittels Drehen bearbeitet, so dass eine Stufe mit einer Tiefe von 5 mm und einem Durchmesser von 12 mm entstand. Die Stufe im Cu-Cr-Zr Bereich -6- dient beim anschließenden Zusammenbau mit dem Cu-Cr-Zr Teil -3- des Werkstoffverbundes, der in der Form eines Rohres mit ∅ 15 x 1,5 mm ausgebildet ist, als Zentrierung für das Elektronenstrahlschweißen. Dasselbe Prinzip erfüllt die Stufe im 316L-seitigen Bereich -5-.
In der Zentrierung des Bereiches -5- wurde ein Stahlrohr -2- aus 316L und in der Zentrierung des Bereiches -6- ein Cu-Cr-Zr Rohr -3- positioniert. Der so erhaltene Zusammenbau wurde dann mittels Elektronenstrahlschweißen stoffschlüssig verbunden, wobei eine umlaufende Schweißnaht -9- im Cu-Cr-Zr und eine weitere umlaufende Schweißnaht -8- im 316L lag. Der geschweißte Verbund wurde anschließend bei 475°C/3h ausgelagert und mechanisch bearbeitet, sodass ein Verbundrohr -1- mit einem Außendurchmesser von 15 mm und einer Wandstärke von 1,5 mm entstand. Die anschließend durchgeführten Untersuchungen, wie Heliumlecktest, Farbeindringprüfung und Röntgenprüfung, zeigten intakte Fügezonen. Beim Zugversuch trat Versagen im Cu-Cr-Zr-Rohr auf. Dies zeigt, dass die Explosionsschweißung wie auch die Elektronenstrahlschweißungen höhere Festigkeiten als das Cu-Cr-Zr aufweisen.

## Patentansprüche

1. Verfahren zur Herstellung eines Werkstoffverbundes (1), der ein Rohr (2) aus Stahl und ein Rohr (3) aus einem Kupfer - Basis - Werkstoff umfasst, **dadurch gekennzeichnet,**
**dass** ein Rohrabschnitt (4) hergestellt wird, bestehend aus einem Bereich (5) aus Stahl und einem Bereich (6) aus einem Kupfer - Basis - Werkstoff, die durch Explosionsschweißen unter Ausbildung der Fügezone (7) verbunden sind,
und das Rohr (2) mit dem Bereich (5) unter Ausbildung der Fügezone (8), sowie das Rohr (3) mit dem Bereich (6) unter Ausbildung der Fügezone (9) durch ein Schmelz- oder Diffusionsschweißverfahren verbunden werden.

2. Verfahren nach Anspruch 1, **dadurch gekennzeichnet, dass** Teil (2) und Bereich (5) aus dem gleichen Werkstoff bestehen.

3. Verfahren nach Anspruch 1 oder 2, **dadurch gekennzeichnet, dass** Teil (3) und Bereich (6) aus dem gleichen Werkstoff bestehen.

4. Verfahren nach einem der Ansprüche 1 bis 3, **dadurch gekennzeichnet, dass** ein Blech aus einem Kupfer - Basis - Werkstoff mit einem Blech aus Stahl durch Explosionsschweißen verbunden und aus dem so hergestellten Verbund der Rohrabschnitt (4) herausgearbeitet wird.

5. Verfahren nach einem der Ansprüche 1 bis 4, **dadurch gekennzeichnet, dass** der Teil (2) mit dem Bereich (5) und der Teil (3) mit dem Bereich (6) durch WIG-, Laser- oder Elektronenstrahlschweißen verbunden wird.

6. Verfahren nach einem der Ansprüche 1 bis 5, **dadurch gekennzeichnet, dass** der Stahl zumindest bereichsweise austenitisches Gefüge aufweist.

7. Verfahren nach einem der Ansprüche 1 bis 5, **dadurch gekennzeichnet, dass** der Kupfer - Basis - Werkstoff teilchengehärtet ist.

8. Verfahren nach Anspruch 7, **dadurch gekennzeichnet, dass** der Kupfer-Basis-Werkstoff Cu-Cr-Zr ist.

9. Verfahren nach einem der Ansprüche 1 bis 8, **dadurch gekennzeichnet, dass** der Werkstoffverbund (1) als Erste-Wand-Komponente oder Teil einer Erste - Wand - Komponente eines Fusionsreaktors eingesetzt wird.

10. Werkstoffverbund (1), der ein Rohr (2) aus Stahl und ein Rohr (3) aus einem Kupfer - Basis - Werkstoff umfasst,
**dadurch gekennzeichnet,**
**dass** die Rohre (2, 3) des Werkstoffverbundes über einen Rohrabschnitt (4) verbunden sind, wobei der Rohrabschnitt (4) aus einem Bereich (5) aus Stahl und einem Bereich (6) aus einem Kupfer - Basis - Werkstoff besteht, die durch Explosionsschweißen unter Ausbildung der Fügezone (7) stoffschlüssig verbunden sind,
sowie das Rohr (2) mit dem Bereich (5) unter Ausbildung der Fügezone (8) und das Rohr (3) mit dem Bereich (6) unter Ausbildung der Fügezone (9) durch ein Schmelz- oder Diffusionsschweißverfahren stoffschlüssig verbunden sind.

## Claims

1. A process for the production of a material composite (1) comprising a tube (2) made of steel and a tube (3) made of a copper-based material, **characterised in that**
a tube section (4) is produced, consisting of a region (5) made of steel and a region (6) made of a copper-based material, which are bonded by explosion welding with the formation of the joining zone (7),
and the tube (2) is bonded to the region (5) with the formation of the joining zone (8) and the tube (3) to the region (6) with the formation of the joining zone (9) by means of a fusion or diffusion welding process.

2. The process according to claim 1, **characterised in that** part (2) and region (5) consist of the same material.

3. The process according to claim 1 or 2, **characterised in that** part (3) and region (6) consist of the same material.

4. The process according to one of claims 1 to 3, **characterised in that** a sheet made of a copper-based material is bonded to a sheet made of steel by explosion welding and the tube section (4) is machined out of the composite produced in this way.

5. The process according to one of claims 1 to 4, **characterised in that** the part (2) is bonded to the region (5) and the part (3) to the region (6) by TIG, laser or electron beam welding.

6. The process according to one of claims 1 to 5, **characterised in that** at least some regions of the steel have an austenitic structure.

7. The process according to one of claims 1 to 5, **characterised in that** the copper-based material is particle hardened.

8. The process according to claim 7, **characterised in that** the copper-based material is Cu-Cr-Zr.

9. The process according to one of claims 1 to 8, **characterised in that** the material composite (1) is used as a first wall component or part of a first wall component of a fusion reactor.

10. A material composite (1) which comprises a tube (2) made of steel and a tube (3) made of a copper-based material,
**characterised in that**
the tubes (2, 3) of the material composite are bonded via a tube section (4), the tube section (4) consisting of a region (5) made of steel and a region (6) made of a copper-based material, which are metallurgically bonded by explosion welding with the formation of the joining zone (7), and the tube (2) is cohesively bonded to the region (5) with the formation of the joining zone (8) and the tube (3) to the region (6) with the formation of the joining zone (9) by means of a fusion or diffusion welding process.

## Revendications

1. Procédé de fabrication d'un matériau composite (1) qui comprend un tube (2) d'acier et un tube (3) de matériau à base de cuivre, **caractérisé en ce qu'**il comprend les étapes consistant à
fabriquer un segment tubulaire (4) composé d'une région (5) d'acier et d'une région (6) de matériau à base de cuivre qui sont assemblées par soudage par explosion en formant la zone de joint (7), et
assembler par un procédé de soudage par fusion ou diffusion tant le tube (2) avec la région (5), en formant la zone de joint (8), que le tube (3) avec la région (6), en formant la zone de joint (9).

2. Procédé selon la revendication 1, **caractérisé en ce que** la pièce (2) et la région (5) sont constituées du même matériau.

3. Procédé selon la revendication 1 ou 2, **caractérisé en ce que** la pièce (3) et la région (6) sont constituées du même matériau.

4. Procédé selon l'une quelconque des revendications précédentes, **caractérisé en ce qu'**une tôle de matériau à base de cuivre est assemblée avec une tôle d'acier par soudage par explosion et que le segment tubulaire (4) est façonné à partir de l'assemblage fabriqué de cette manière.

5. Procédé selon l'une quelconque des revendications précédentes, **caractérisé en ce que** la pièce (2) est assemblée avec la région (5), et la pièce (3) est assemblée avec la région (6), par soudage au tungstène sous gaz inerte (Wolfram Inert Gas, ou WIG), ou par laser, ou par faisceau électronique.

6. Procédé selon l'une quelconque des revendications précédentes, **caractérisé en ce que** l'acier présente au moins régionalement une structure austénitique.

7. Procédé selon l'une quelconque des revendications 1 à 5, **caractérisé en ce que** le matériau à base de cuivre est du type à particules durcies.

8. Procédé selon la revendication 7, **caractérisé en ce que** le matériau à base de cuivre est Cu-Cr-Zr.

9. Procédé selon l'une quelconque des revendications précédentes, **caractérisé en ce que** le matériau composite (1) est utilisé comme composant de première paroi ou comme partie d'un composant de première paroi d'un réacteur de fusion.

10. Matériau composite (1) qui comprend un tube (2) d'acier et un tube (3) de matériau à base de cuivre,
**caractérisé en ce que**
les tubes (2, 3) du matériau composite sont assemblés au moyen d'un segment tubulaire (4); segment tubulaire (4) étant composé d'une région (5) d'acier et d'une région (6) de matériau à base de cuivre qui sont assemblées par adhérence des matériaux, par soudage par explosion, en formant la zone de joint (7), et **en ce que**,
un procédé de soudage par fusion ou diffusion assemble par adhérence de matériaux le tube (2) à la région (5) en formant la zone de joint (8), et le tube (3) à la région (6) en formant la zone de joint (9).
